# FASCICULE DE BREVET EUROPEEN

(11) **EP 2 055 064 B1**
(45) Date de publication et mention de la délivrance du brevet: **13.02.2013**
(21) Numéro de dépôt: 07788516.8
(22) Date de dépôt: 22.08.2007
(51) Int. Cl.: H04L 29/06

(54) **Système et procède de gestion décentralisée d'un système sécurise délivrant différents services**
System und Verfahren zur dezentralisierten Verwaltung eines verschiedene Dienste abliefernden sicheren Systems
System and method of decentralized management of a secure system delivering different services

(30) Priorité: 23.08.2006 FR 0607469
(43) Date de publication de la demande: 06.05.2009
(73) Titulaire: THALES, 92200 Neuilly sur Seine (FR)
(72) Inventeur: ROUSSET, Gilles, F-95100 Argenteuil (FR)
(74) Mandataire: Dudouit, Isabelle
(86) Numéro de dépôt international: PCT/EP2007/058739
(87) Numéro de publication internationale: WO 2008/023036

(56) Documents cités:
- WO-A-03/075568
- DE-A1- 19 511 298
- US-A- 5 218 638
- MARC A KAPLAN: "IBM Cryptolopes, SuperDistribution and Digital Rights Management" INTERNET CITATION, [Online] 30 décembre 1996 (1996-12-30), XP002132994 Extrait de l'Internet: URL:http://www.research.ibm.com/people/k/k aplan/cryptolope-docs/crypap.html> [extrait le 2000-03-14]

## Description

L'objet de l'invention concerne un procédé et un système permettant de gérer de manière décentralisée un système sécurisé par un tiers de confiance.

Elle s'applique, notamment, dans tout système de communication ou informatique offrant des services accessibles librement à tout public et des services accessibles au moyen d'une clé d'accès ou d'un code.

Elle peut notamment être utilisée dans des systèmes de positionnement par satellite.

Un système sécurisé délivrant différents services accessibles au moyen de clés et des signaux accessibles à tout public comprend, en général, un service de gestion centralisé. Les récepteurs utilisables pour accéder au système payant ou services réglementés (nécessités d'avoir des clés) sont gérés par l'opérateur responsable de l'infrastructure du système. La gestion des récepteurs est alors centralisée au niveau de l'infrastructure avec une capacité en bande passante limitée qui ne permet de gérer qu'un nombre restreint d'utilisateurs des services réglementés. En outre, dans un souci d'optimisation, les utilisateurs sont regroupés en « groupe d'utilisateurs » partageant les mêmes caractéristiques et devant subir les mêmes contraintes décidées en central. De plus, de part la nature centralisée de la gestion, les temps de réponse de l'infrastructure sont importants, particulièrement pour l'accès des abonnés au service, ainsi que pour le retrait de leur droit.

Enfin, compte tenu des principes de gestion des abonnés mis en oeuvre, le déni d'un utilisateur, action qui permet de supprimer temporairement l'accès d'un utilisateur à un service donné, peut perturber d'autres utilisateurs, les privant ainsi temporairement de l'accès au service.

Dans le document intitulé « IBM Cryptolopes, Superdistribution and Digital Rights Management », XP002132994, le « publisher » distribue le cryptologue qui est chiffré par un centre. L'infrastructure fournisseur de services ne transmet pas directement le signal et les clés de déni vers les utilisateurs et ne reçoit pas de la part de l'infrastructure un signal et des clés de déni de la part de l'infrastructure.

L'invention concerne un système pour gérer la distribution de clés d'accès à des services offerts par une infrastructure d'une manière décentralisée conforme à la revendication 1.

Les moyens de distribution des clés entre un récepteur maître et un récepteur esclave comprennent par exemple une liaison sécurisée et une liaison non sécurisée.

Le système peut être un système de positionnement par satellite et en ce que les services sont des informations de navigation.

L'invention concerne aussi un procédé de gestion décentralisée d'un système sécurisé conforme à la revendication 4.

Les services sont, par exemple, des services de navigation et la transmission des signaux s'effectuent par satellite.
On peut utiliser une liaison sécurisée pour transmettre la clé de base.

Le système et le procédé selon l'invention offrent notamment les avantages suivants : ils permettent une gestion décentralisée, individualisée et autonome de groupes d'utilisateurs d'un service réglementé par une entité abonnée aux services de l'infrastructure du tiers de confiance et s'appuyant sur un réseau de communication.

D'autres caractéristiques et avantages de la présente invention apparaîtront mieux à la lecture de la description, donnée à titre illustratif et nullement limitatif, qui suit annexée des figures qui représentent :
- La figure 1 une structure selon l'art antérieur d'un système sécurisé offrant plusieurs services,
- La figure 2 une architecture de système selon l'invention.

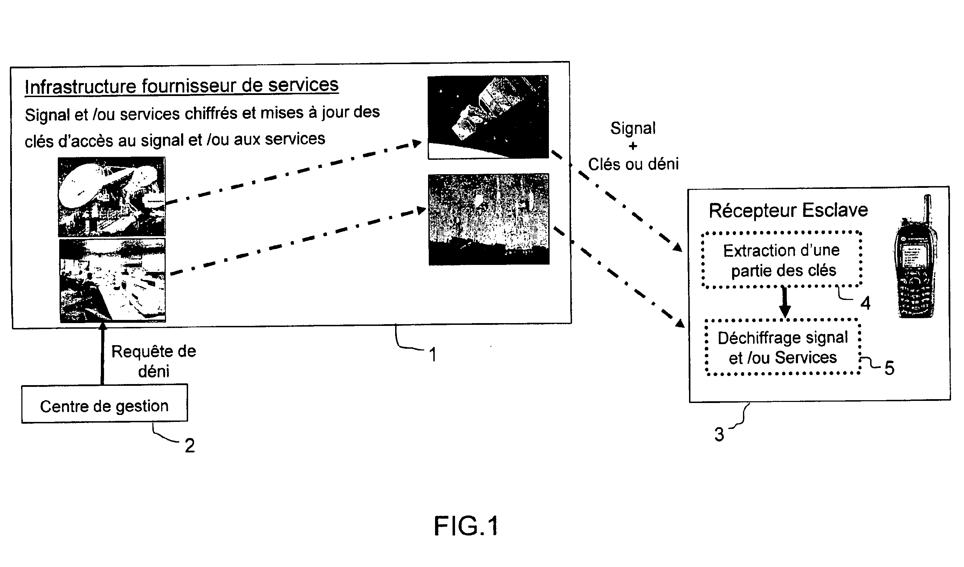

Sur la figure 1 on a représenté une architecture de système selon l'art antérieur.

Elle comporte une infrastructure fournisseur de services 1 délivrant les signaux et/ou les services chiffrés et les mises à jour des clés d'accès ou signal et/ou aux services. Un centre de gestion centralisé 2 est adapté à recueillir le besoin de chaque utilisateur abonné et les transmet à l'infrastructure qui va émettre les signaux et les clés ou déni. Le centre de gestion connu de l'Homme du métier permet notamment au demandeur de gérer l'attribution des droits à ses utilisateurs ; droits obtenus auprès de la gestion centralisée de l'infrastructure fournisseur de services.

En fonction des informations reçues, l'infrastructure délivre, à un groupe d'utilisateurs ou abonnés, le signal contenant notamment les clés de déchiffrement nécessaires permettant l'accès aux services sécurisés pour une période de temps déterminée ou l'information de déni pour les utilisateurs qui n'ont plus droit d'accéder à un certain service.

Les utilisateurs sont regroupés en « groupe d'utilisateurs » partageant les mêmes caractéristiques et devant subir les mêmes contraintes décidées en central.

Les utilisateurs sont pourvus de moyens de réception, dénommés récepteur esclave 3 sur la figure. Ces moyens comprennent un module 4 adapté à extraire une partie des clés, et un module de déchiffrement ou décodage 5 adapté à déchiffrer le signal et/ou les services.

Compte tenu des principes de gestion des abonnés mis en oeuvre, le déni d'un utilisateur peut perturber d'autres utilisateurs, les privant ainsi, temporairement de l'accès au service.

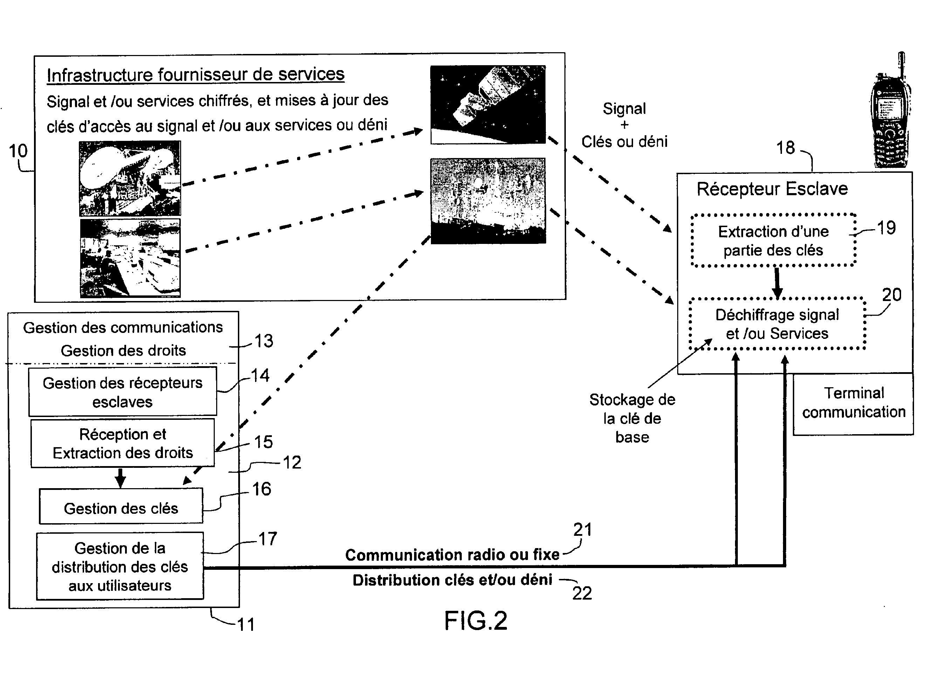

La figure 2 représente un exemple d'architecture de système selon l'invention s'appuyant sur une infrastructure fournisseur de services 10, un centre de gestion centralisé des communications et de gestion des clés 11, comprenant par exemple un récepteur maître 12.

L'infrastructure fournisseur de services comprend différents moyens (non représentés sur la figure) adaptés notamment à générer un signal et/ou des services chiffrés et à effectuer des mises à jour des clés d'accès au signal et/ou aux services ou encore à l'information de déni.

Le centre de communication centralisé 11 est composé de modules adaptés pour exécuter les fonctions suivantes :
Un module 13 adapté à la gestion des droits des utilisateurs (association récepteur-droits), situé au niveau d'une Interface Homme machine, par exemple un ordinateur,
Au niveau du récepteur maître 12 :
- Un module 14 adapté à la gestion des récepteurs esclaves (association récepteur-utilisateur),
- Un module 15 adapté à la réception et l'extraction des droits, ces droits donnant accès aux services gérés en central au niveau de l'infrastructure.
- Un module 16 pour la gestion des clés,
- Un module 17 de gestion de la distribution individualisée des droits aux récepteurs
Ces fonctions permettent de garantir le maintien en sécurité du service auquel les droits donnent accès. Sans sortir du cadre de l'invention, le récepteur maître peut comprendre d'autres fonctions dont la gestion est assurée par le centre de gestion. Ces fonctions permettent ainsi d'étendre le nombre de services contrôlés par le centre de gestion et auxquels le récepteur esclave peut être abonné par la distribution individualisée des droits.

Le récepteur « maître » 12 intègre la totalité des fonctions de sécurité et agit en tant que relais intelligent vis à vis des récepteurs dit « esclaves » 18. Il reçoit un signal de l'infrastructure ainsi que les clés d'autorisation d'accès à un service pour un utilisateur donné.

Les récepteurs « esclaves » intègrent uniquement la fonction d'acquisition du signal de service réglementé S. Un récepteur esclave reçoit un signal et des clés ou un déni de la part de l'infrastructure fournisseur de services. Il comprend un moyen 19 adapté à l'extraction d'une partie des clés reçues de l'infrastructure et un moyen 20 adapté à déchiffrer le signal et/ou 1<es services. Les récepteurs esclaves sont asservis au récepteur « maître » par un système de distribution sécurisé de clés 21, 22.
Le système de gestion locale du récepteur maître autorise le fonctionnement du récepteur esclave pour une période déterminée en leur distribuant des clés gérables au niveau du système de gestion et de supervision du récepteur « maître ».

Le détail des fonctions de communication est donné ci-après :
Extraction des droits associés à un service. Cette fonction est assurée par le récepteur maître qui est un abonné de l'infrastructure (déclaré au niveau de l'infrastructure) et à ce titre reçoit le signal de service S diffusé par les systèmes d'émission de messages et d'informations de l'infrastructure. Du signal reçu, le récepteur maître en extrait, les services qui, dans le cas d'un système de positionnement par satellites sont par exemple :
   - Des informations de navigation (almanach, données d'intégrité, etc.), et
   - Des droits du service, c'est-à-dire les droits attachés à un utilisateur.
Ces droits sont contenus dans un message de sécurité du service que le «récepteur maître» déchiffre. Il en extrait un système de clés à validité spatio-temporelle qui seront en tout ou en partie diffusées aux récepteurs esclaves, leur permettant ainsi d'accéder au signal de service.

### La gestion locale des récepteurs.

La gestion locale des récepteurs assure la gestion du parc de récepteurs esclave, l'extraction et l'affectation de clés à ces récepteurs esclaves. Le système de gestion locale des utilisateurs comprend, par exemple, un moyen adapté pour s'approprier les droits de service acquis par le récepteur maître et les distribue de façon limitée aux récepteurs «esclave».

Au niveau du centre de gestion, la fonction de gestion « esclave » permet l'enregistrement, la gestion des droits et la résiliation des récepteurs esclaves qui lui sont rattachés. Déclarer un récepteur esclave consiste à l'identifier, lui affecter une autonomie (i.e. une durée et/ou un espace physique d'accès au signal de service sans communication avec le centre de gestion locale). En utilisant ces différentes informations, cette fonction pilote la fonction de gestion des clés pour initialiser le récepteur esclave puis permettre, la réception régulière de ses droits.

La fonction gestion de clé permet de gérer des clés de base, et de chiffrer des clés de service par la clé de base des récepteurs. Cette clé noire, régulièrement distribuée aux récepteurs esclaves, constitue leurs droits à accéder au signal de service sur demande de la fonction de gestion des utilisateurs, la fonction de gestion des clés :
- génère des clés de base lors de la déclaration d'un nouveau récepteur,
- programme le chiffrement de clés avec une fréquence dictée par l'autonomie souhaitée pour les récepteurs esclaves.
La fonction « distribution de clés » assure la distribution des clés de base et des droits des récepteurs esclaves (clés de service chiffrées par la clé de base).

Les clés de base sont hautement sensibles et sont transférées, par exemple, aux récepteurs esclaves en utilisant un réseau protégé. Les récepteurs esclaves ont accès à ce réseau protégé à chaque fois qu'ils commencent leur mission (et donc qu'ils se trouvent à proximité d'une infrastructure protégée).

Les clés noires (les droits utilisateurs S) ne sont pas sensibles car elles sont protégées par la clé de base des récepteurs «esclaves». Ces clés sont distribuées aux récepteurs esclaves par un réseau faiblement sécurisé avec une fréquence fonction de l'autonomie accordée aux récepteurs esclaves.

Le système de gestion locale comprend notamment, un dispositif de génération puis de chiffrement de clés, ainsi qu'un dispositif de distribution de ces clés par deux canaux différents, respectivement 18 et 19 sur la figure 2, par exemple :
- Un réseau hautement sécurisé pour transmettre les clés de base aux récepteurs esclaves, et
- Un réseau de communication/distribution faiblement protégé en confidentialité pour la gestion de droits des récepteurs «esclave».
Imaginons que le récepteur maître acquiert les droits, lui permettant d'accéder au signal de service pour les X mois à venir, le système de gestion locale des utilisateurs exploitent ces droits pour autoriser les récepteurs « esclaves » à Imaginons que le récepteur maître acquiert les droits, lui permettant d'accéder au signal de service pour les X mois à venir, le système de gestion locale des utilisateurs exploite ces droits pour autoriser les récepteurs « esclaves » à accéder au signal avec une meilleure granularité. Cette granularité s'exerce selon deux axes :
- Chaque récepteur « esclave » est géré de façon individualisée et peut recevoir des droits propres,
- Les droits concédés aux récepteurs « esclaves » sont parfaitement maîtrisés et peuvent varier de jour en jour.

Dans le cas d'une application de positionnement par satellite, un récepteur maître abonné à l'infrastructure de service acquiert à ce titre, non seulement les informations de positionnement diffusées par le signal de service, mais aussi les droits qui lui permettent de prolonger son accès au signal de service dans le temps.

Le ou les récepteurs esclaves sont gérés au niveau local du réseau de communication sécurisé et non en central au niveau de l'infrastructure. Ils sont indépendants du récepteur maître géré en central et, à ce titre, ils subissent les mêmes contraintes en termes de politique de sécurité.
Les récepteurs esclaves reçoivent :
- Une clé de base en début de mission. Cette clé hautement sensible doit être stockée de façon sécurisée dans le récepteur. Elle est injectée dans le récepteur esclave dans un environnement parfaitement sécurisé et maîtrisé, par exemple, en utilisant un réseau sécurisé permettant de connecter les récepteurs « esclaves » au système de gestion locale des utilisateurs.
- Régulièrement une clé noire leur permettant d'accéder au signal de service. Ils déchiffrent cette clé en utilisant leur propre clé de base, puis utiliser la clé ainsi obtenue pour démoduler le signal de service. Cette clé leur donne à minima l'accès au signal pour 24 heures, par exemple. système de gestion locale des abonnés, en utilisant le canal de distribution sécurisé permettant ainsi de contrôler les récepteurs «esclave» chiffrés par leur propre clé de base. Ceci permet d'utiliser un réseau de communication faiblement protégé en confidentialité pour transmettre les droits des utilisateurs. Au niveau des récepteurs «esclave», est mis en oeuvre un procédé de reconstruction de clés permettant l'accès aux services sécurisés distribués par l'infrastructure à partir des droits transmis par le système de gestion locale des utilisateurs.

Les récepteurs «esclaves», de part leurs fonctions réduites déni, n'ont besoin que d'un jeu de clé de durée limitée, leur permettant d'accéder au signal selon les droits fixés par le système de gestion locale.

Avantageusement, la gestion locale des récepteurs assure la gestion du parc de récepteurs esclave, la génération et l'affectation de clés à ces récepteurs esclaves et la distribution de ces clés aux récepteurs esclaves.

L'algorithme de chiffrement à utiliser pour protéger les jeux de clés par la clé de base peut être choisi parmi les différents algorithmes agréés pour protéger des clés.

La sécurité du système ainsi obtenue est au moins aussi importante que celle offerte par un système centralisé. En effet, le système de gestion centralisée des récepteurs contrôle l'accès au signal de chaque récepteur esclave avec une granularité de la journée (granularité minimum offerte par l'infrastructure S). Elle contrôle également chaque récepteur de façon totalement indépendante par le truchement de la notion de clé de base. Chaque récepteur esclave étant doté de sa propre clé de base, il ne peut acquérir que les droits qui lui sont destinés et en aucun cas ceux des autres récepteurs. Cette assurance repose sur des procédés de cryptographie.

Sans sortir du cadre de l'invention, le système et les étapes décrites ci-dessus, peuvent être utilisés dans tout système intégrant une capacité de communications, tous émetteurs/récepteurs radios et terminaux intégrant une capacité de communications, toute solution réseau sans fil, de type réseau S-Wimax, S-Wifi, UWB, des infrastructures des banques, .....

## Revendications

1. Système permettant de gérer la distribution de clés d'accès à des services offerts par une infrastructure d'une manière décentralisée comprenant un réseau de communication, un dispositif d'émission de messages, où les utilisateurs sont regroupés en « groupe d'utilisateurs » partageant les mêmes caractéristiques et devant subir les mêmes contraintes décidées en central, ledit système comportant au moins les éléments suivants :
• un récepteur maître (12) et un ou plusieurs récepteurs esclaves (18),
• un centre de communication centralisée (11) comprenant des moyens (13) permettant la gestion locale de récepteurs esclaves,
• un récepteur maître (12) comprenant un module de réception des droits contenus dans le signal émis par l'infrastructure et d'extraction d'un système de clés (15), ainsi que l'affectation (17) aux récepteurs esclaves qui font partie d'un même groupe d'utilisateurs de tout ou en partie des clés extraites,
• ledit récepteur « maître » (12) intègre la totalité des fonctions de sécurité et agit en tant que relais intelligent vis à vis des récepteurs « esclaves » (18),
• un moyen de distribution (21, 22) des clés extraites du récepteur maître vers les récepteurs esclaves en fonction des droits associés auxdits récepteurs esclaves, les clés étant chiffrés par une clé de base associés à un récepteur,
• un récepteur esclave (18) comprenant un moyen d'extraction (19) d'au moins une partie des clés distribuées par l'infrastructure et un moyen (20) adapté à recevoir une ou plusieurs clés d'autorisation d'accès à un ou plusieurs services à partir des droits transmis par le récepteur maître, et ledit récepteur esclave comprenant un module de mémorisation d'une clé de base.

2. Système selon la revendication 1 **caractérisé en ce que** les moyens de distribution des clés entre un récepteur maître et un récepteur esclave comprennent une liaison sécurisée et une liaison non sécurisée.

3. Système selon la revendication 1 **caractérisé en ce que** le système est un système de positionnement par satellite et **en ce que** les services sont des informations de navigation.

4. Procédé de gestion décentralisée d'un système sécurisé comprenant une infrastructure délivrant différents services à différents utilisateurs, où les utilisateurs sont regroupés en « groupe d'utilisateurs » partageant les mêmes caractéristiques et devant subir les mêmes contraintes décidées en central et en ce qu'il comporte au moins les étapes suivantes :
• transmettre un signal à une fonction centralisée, ledit signal comprenant des informations sur les services et les droits des utilisateurs,
• un récepteur maître (12) reçoit un signal de l'infrastructure ainsi que les clés d'autorisation d'accès à un service pour un utilisateur donné,
• ledit récepteur «maître» (12) intègre la totalité des fonctions de sécurité et agit en tant que relais intelligent vis à vis des récepteurs «esclaves» (18).
• ledit récepteur maître (12) extrait les droits associés à un utilisateur, il en extrait un système de clés, il affecte tout ou partie de ces clés aux récepteurs esclaves (18) et il diffuse les clés affectées vers les récepteurs esclaves, les clés étant chiffrées par une clé de base associée à un récepteur,
• lesdits récepteurs esclaves déchiffrent la clé leur donnant accès à un service donné à partir de leur clé de base.

5. Procédé de gestion selon la revendication 4 **caractérisé en ce que** les services sont des services de navigation et la transmission des signaux s'effectuent par satellite.

6. Procédé de gestion selon la revendication 4 **caractérisé en ce que** l'on utilise une liaison sécurisée pour transmettre la clé de base.

## Claims

1. A system for managing the distribution of access keys to services offered by an infrastructure in a decentralised manner comprising a communication network, a device for transmitting messages, wherein the users are grouped into "user groups" sharing the same characteristics and having to be subject to the same constraints that are decided centrally, said system comprising at least the following elements:
a master receiver (12) and one or more slave receivers (18),
a centralised communication centre (11) comprising means (13) for locally managing slave receivers,
a master receiver (12) comprising a module for receiving the rights contained in the signal transmitted by the infrastructure and for extracting a key system (15), as well as for assigning (17) all or part of the extract keys to the slave receivers that belong to the same user group,
said "master" receiver (12) integrating all of the security functions and acting as an intelligent relay with regard to the "slave" receivers (18),
means (21, 22) for distributing the keys extracted from the master receiver to the slave receivers as a function of the rights associated with said slave receivers, said keys being ciphered by a base key associated with a receiver,
a slave receiver (18) comprising means (19) for extracting at least one part of the keys distributed by the infrastructure and means (20) designed to receive one or more keys for authorising access to one or more services on the basis of rights transmitted by the master receiver, and said slave receiver comprising a module for storing a base key.

2. The system according to claim 1, **characterised in that** the means for distributing keys between a master receiver and a slave receiver comprise a secure link and a non-secure link.

3. The system according to claim 1, **characterised in that** the system is a satellite positioning system and **in that** the services are navigation information.

4. A method for the decentralised management of a secure system, comprising an infrastructure delivering different services to different users, wherein the users are grouped into "user groups" sharing the same and having to be subject to the same constraints that are decided centrally, and in that it comprises at least the following steps:
• transmitting a signal to a centralised function, said signal comprising information that relates to the services and the user rights,
• a master receiver (12) receiving a signal from the infrastructure as well as the keys for authorising access to a service for a given user, said "master" receiver (12) integrating all of the security functions and acting as an intelligent relay with regard to the "slave" receivers (18),
• said master receiver (12) extracting the rights associated with a user, extracting a system of keys therefrom, assigning all or part of these keys to the slave receivers (18) and distributing the assigned keys to the slave receivers (18), the keys being coded by a base key associated with a receiver,
said slave receivers decoding the key that gives them access to a given service on the basis of their base key.

5. The method according to claim 4, **characterised in that** the services are navigation services and the signals are transmitted by satellite.

6. The management method according to claim 4, **characterised in that** a secure link is used to transmit the base key.

## Patentansprüche

1. System zum Verwalten der Verteilung von Zugangsschlüsseln zu Diensten, die von einer Infrastruktur auf dezentralisierte Weise angeboten werden, umfassend ein Kommunikationsnetz, eine Vorrichtung zum Senden von Nachrichten, wobei die Benutzer zu "Benutzergruppen" gruppiert sind, die dieselben Charakteristiken gemeinsam nutzen und denselben zentral beschlossenen Beschränkungen unterliegen, wobei das System wenigstens die folgenden Elemente umfasst:
einen Master-Empfänger (12) und einen oder mehrere Slave-Empfänger (18),
ein zentralisiertes Kommunikationszentrum (11), das Mittel (13) für die zentrale Verwaltung von Slave-Empfängern umfasst,
einen Master-Empfänger (12), der ein Modul zum Empfangen von Rechten, die in dem von der Infrastruktur gesendeten Signal enthalten sind, und zum Extrahieren eines Systems von Schlüsseln (15) sowie zum Zuordnen (17) von einigen oder allen extrahierten Schlüsseln zu den Slave-Empfängern umfasst, die zu derselben Benutzergruppe gehören,
wobei der "Master"-Empfänger (12) alle Sicherheitsfunktionen integriert und als intelligentes Relais gegenüber den "Slave"-Empfängern (18) agiert,
ein Mittel (21, 22) zum Verteilen der vom Master-Empfänger extrahierten Schlüssel zu den Slave-Empfängern in Abhängigkeit von den mit den Slave-Empfängern assoziierten Rechten, wobei die Schlüssel durch einen mit einem Empfänger assoziierten Basisschlüssel verschlüsselt sind,
einen Slave-Empfänger (18), der ein Mittel (19) zum Extrahieren von wenigstens einem Teil der durch die Infrastruktur verteilten Schlüssel und ein Mittel (20) zum Empfangen von einem oder mehreren Schlüsseln zum Autorisieren des Zugriffs auf einen oder mehrere Dienste auf der Basis von vom Master-Empfänger übertragenen Rechten umfasst, und wobei der Slave-Empfänger ein Modul zum Speichern eines Basisschlüssels umfasst.

2. System nach Anspruch 1, **dadurch gekennzeichnet, dass** die Mittel zum Verteilen der Schlüssel zwischen einem Master-Empfänger und einem Slave-Empfänger eine gesicherte Verbindung und eine ungesicherte Verbindung umfassen.

3. System nach Anspruch 1, **dadurch gekennzeichnet, dass** das System ein Satellitenpositionierungssystem ist, und dadurch, dass die Dienste Navigationsinformationen sind.

4. Verfahren zum dezentralisierten Verwalten eines gesicherten Systems, das eine Infrastruktur umfasst, die verschiedenen Benutzern verschiedene Dienste bereitstellt, wobei die Benutzer zu "Benutzergruppen" gruppiert sind, die dieselben Charakteristiken gemeinsam nutzen und denselben zentral beschlossenen Beschränkungen unterliegen, und dadurch, dass es wenigstens die folgenden Schritte beeinhaltet:
Senden eines Signals zu einer zentralisierten Funktion, wobei das Signal Informationen über die Dienste und die Benutzerrechte umfasst,
Empfangen, durch einen Master-Empfänger (12), eines Signals von der Infrastruktur sowie der Schlüssel zum Autorisieren des Zugriffs auf einen Dienst für einen gegebenen Benutzer,
wobei der "Master-"Empfänger (12) alle Sicherheitsfunktionen integriert und als intelligentes Relais gegenüber den "Slave"-Empfängern (18) agiert,
Extrahieren, durch den Master-Empfänger (12), der Rechte in Verbindung mit einem Benutzer, Extrahieren eines Systems von Schlüsseln daraus, Zuordnen aller oder einiger dieser Schlüssel zu den Slave-Empfangern (18) und Verteilern der zugeordneten Schlüssel zu den Slave-Empfängern, wobei die Schlüssel durch einen mit einem Empfänger assoziierten Basisschlüssel codiert sind,
Decodieren, durch die Slave-Empfänger, des Schlüssels, der ihnen Zugang zu einem gegebenen Dienst gewährt, mit deren Basisschlüssel.

5. Verfahren zum Verwalten nach Anspruch 4, **dadurch gekennzeichnet, dass** die Dienste Navigationsdienste sind und die Signale per Satellit gesendet werden.

6. Verfahren zum Verwalten nach Anspruch 4, **dadurch gekennzeichnet, dass** eine gesicherte Verbindung zum Senden des Basisschlüssels verwendet wird.
